# EUROPÄISCHE PATENTSCHRIFT

(11) **EP 1 632 446 B1**
(45) Veröffentlichungstag und Bekanntmachung des Hinweises auf die Patenterteilung: **27.06.2007**
(21) Anmeldenummer: 05018337.5
(22) Anmeldetag: 24.08.2005
(51) Int. Cl.: B65G 53/46

(54) **Verfahren und Vorrichtung zur Kompensation der thermischen Ausdehnung eines Zellenradschleusenrotors**
Method and device for the compensation of the thermal expansion of a cellular rotary valve
Méthode et dispositif de compensation de la dilatation thermique d'une vanne à roue cellulaire

(30) Priorität: 26.08.2004 DE 102004041254
(43) Veröffentlichungstag der Anmeldung: 08.03.2006
(73) Patentinhaber: Zeppelin Silos & Systems GmbH, 88045 Friedrichshafen (DE)
(72) Erfinder: Heep, Dieter, 88368 Bergatreute (DE)
(74) Vertreter: Riebling, Peter

(56) Entgegenhaltungen:
- DE-B- 1 174 257
- US-A- 4 915 265
- US-A- 5 014 885
- US-B1- 6 237 816

## Beschreibung

Die Erfindung betrifft ein Verfahren und eine Vorrichtung zur Beherrschung eines Rotordurchmessers nach dem Oberbegriff des Anspruchs 1.
Vorrichtungen dieser Art werden benutzt, um ein Klemmen des Schleusenrotors im Gehäuse zu verhindern, wenn bei Inbetriebnahme eines Systems das heiße Schüttgut den Rotor schneller erwärmt als das Gehäuse und dieser über seine Durchmesservergrößerung das Gehäuse berührt.

Nach dem Stand der Technik wird ein Kompromiss aus Vorheizen des Gehäuses und Herstellung eines größeren radialen Spaltes bei etwa 20° Celsius Herstellungstemperatur gewählt, um einen Spalt unter Betriebstemperatur zu erhalten, der eine Berührung des Rotors am Gehäuse ausschließt.

Der Preis dafür sind höhere Leckluftwerte in der Anfahrphase bis aus dem Fertigungsspalt letztendlich durch den komplexen Vorgang des Gehäusevorheizens und der Wärmeausdehnung des Rotors der vorberechnete Betriebsspalt gebildet wurde. Hinweise hierzu sind in der Literaturstelle "Powder handling & processing: Minimum Gas Leakage through Rotary Feeders used in (hot) Dense Phase Pneumatic Conveying Systems", Vol. 15, Nr. 1, Januar/Februar 2003 zu finden.

In der DE 37 42 519 und in der DE 37 42 521 werden gesteuerte Kunststoffleisten benutzt, um den Rotordurchmesser veränderbar zu gestalten. Weiterhin sind die verschiedensten Stegjustiermöglichkeiten bekannt geworden, von Federanpressungen bis zur Anwendung von pneumatischer oder hydraulischer Hilfsenergie.

Alle diese Lösungen bauen auf die schwierig herzustellenden Stegnuten und deren radiale Veränderung. Fräst man mittels Hilfe eines Scheibenfräsers das fertige Zellenrad, so findet man immer durch Schweißen verzogene Stege vor. Fräst man erst die Stege, verzieht sich der Nutbereich, wenn am Steg geschweißt wird. Bei den vom Markt gefragten Zellenradschleusengrößen von 500 bis 800 mm Durchmesser ist dies ein teures, aussichtsloses Unterfangen.

Ein anderer Lösungsweg versucht, durch temperaturabhängiges Verschieben eines konischen Rotors im kegeligen Gehäusedurchmesser mit Hilfe einer Verstelleinrichtung optimale Betriebsspalte zu erzielen.

In der DE 199 36 136 werden die verschiedensten Lösungen beschrieben, bei denen Mittel zur Messung des Abstandes zwischen Zellenrad und Gehäusebohrung vorhanden sind und das Zellenrad und/oder die Gehäusebohrung in Abhängigkeit des Messwertes zumindest örtlich radial verformbar sind.

Auch die DE 11 74 257 baut auf die Stegnuten, in denen mittels einer richtungsweisenden Lösung Platten entsprechend der radialen und axialen Zellenradwandlänge aus verschiedenen, wärmeausdehnfähigen Werkstoffen vorgeschlagen wurden.

Die Werkstoffe sind so angeordnet, dass die eingebrachte Temperatur einen Durchmesserausgleich des Zellenrades in Abhängigkeit von der Temperatur vornehmen kann. In gleicher Weise soll die Wahl des Gehäusewerkstoffes zum Zellenradwerkstoff Einfluss auf das Maß des Betriebsspaltes nehmen.

Diese Lösung hat sich in der Praxis nicht durchgesetzt. Bekanntlich erfolgt die Temperaturausdehnung dreidimensional. Leider macht die DE 11 74 257 keine Angaben über die Auswirkung der Plattenausdehnung in axialer Richtung, insbesondere die Auswirkung auf die Befestigungsschrauben Pos. 6 und 7, die unzulässigen Spannungen über die Länge der Plattenverbindungen ausgesetzt sind, wird nicht angegeben.

Die Platten hoher Wärmeausdehnung dehnen sich bei entsprechender Wärmeeinwirkung in allen drei Raumachsen aus. Bei der genannten Druckschrift bestand deshalb der Nachteil eines unvermeidbaren Bimetall-Effektes, der sich dadurch ergibt, dass sich der Verschiebungskörper über die gesamte axiale Länge des Zellenradsteges erstreckt und sich wegen seiner wärmebedingt großen Ausdehnung zwischen den festhaltenden Schrauben aufwölbt.

Damit war die Funktionsfähigkeit der Ausdehnungsvorrichtung nicht mehr gegeben, weil das Verwerfen der Verschiebungskörper in dem sehr engen Spalt des Zellenradsteges zu hohen Reibwerten an der Stegnutwand führte, was eine Ausgleichsbewegung verhinderte.

Die in axialer Richtung entstehende, unvermeidbare Bimetallwirkung kann die Bewegung in der Stegnut in radialer Richtung ebenso gefährden, wie das Eindringen von Schüttgut in die Plattensandwich-Nut-Kombination. Ursächlich für die Störanfälligkeit ist die Einteiligkeit der Platte Pos. 3. Die sich dadurch einstellenden Klemmeffekte machten die Vorrichtung unbrauchbar.

Die Erfindung geht hierbei in ihrem Oberbegriff vom Gegenstand der DE 11 74 257 aus, aus der - in Übereinstimmung mit dem Erfindungsgegenstand - eine Zellenradschleuse zum Zuführen oder zum Austragen von schüttfähigem Gut als bekannt angibt, bei der zum Konstanthalten des radialen Spiels zwischen den Wänden des Zellenrades und der Gehäusewand deren wärmebedingten Durchmesseränderungen durch die Kombination von Werkstoffen unterschiedlicher Wärmedehnungen gegeneinander ausgeglichen werden. Hierbei setzt sich jede Wand des Zellenrades aus parallel zueinander verlaufenden plattenförmigen Teilen unterschiedlicher Wärmedehnung zusammen.

Der Erfindung liegt die Aufgabe zugrunde, das Spaltmaß zwischen Zellenrad und Gehäusebohrung beim An- und Abfahren und/oder bei prozessbedingten Änderungen der Betriebstemperatur so zu steuern, dass ein Mindestspalt gewährleistet wird, der die Leckage auf ein Mindestmaß reduziert, gleichzeitig aber eine Biegung des Zellenrades durch Druckdifferenz ohne Berührung der Gehäusebohrung zulässt.

Diese Aufgabe wird durch die technische Lehre des Anspruches 1 gelöst.

In einer bevorzugten Ausführungsform der Erfindung wird angegeben, dass eine Temperaturausdehnungsrichtung definiert ist.

Die Gleichung für die vorliegende Ausführung lautet: Zellenradradius x Zellenradsteg-Werkstoffausdehnungskoeffizient x Werkstofftemperatur minus Zurückhalteeinrichtungslänge x Zurückhaltungswerkstoff-Ausdehnungskoeffizient x Werkstofftemperatur (herauskürzbar bei gleichem Wert) ist gleich der gewünschten, vorgeplanten Ausdehnung des Rotordurchmessers.

Hier ist der Zurückhaltungswerkstoff-Ausdehnungskoeffizent vielfach kleiner als der des Zellenradwerkstoffes.
Die Konstruktion wird mit zwei Zurückhaltungseinrichtungen ausgeführt, deren Befestigung untereinander, in axialer Richtung betrachtet, temperaturabhängig unbeeinflussbar bleibt.
Es wird demnach eine Zurückhaltungseinrichtung vorgeschlagen, die einen sehr geringen Temperatur-Ausdehnungskoeffizienten hat.

Idealerweise wird ein Werkstoff verwendet, der den niedrigsten Temperatur-Ausdehnungskoeffizienten bei noch vertretbarem Material- und Kostenaufwand aufweist.

Ein solches Material ist beispielsweise ein Werkstoff Nummer 1.3912 der unter dem Markennamen "NILO Alloy 36" vertrieben wird.

Es handelt sich um eine Nickel-Eisen-Legierung mit sehr geringer Wärmeausdehnung und mit 36% Nickelanteil. Sie ist im Normalbereich atmosphärischer Temperaturen fasst maßkonstant und besitzt einen niedrigen Ausdehnungsbeiwert bis in tiefkalte Temperaturen (bis circa 260° Celsius).

Ein solches Material wird nun als Zurückhalteeinrichtung verwendet, sozusagen als Ankerpunkt, an dem die Endleisten in radialer Richtung (durch stirnseitige, in axialer Richtung angeordnete Befestigungen) fixiert werden. Die temperaturabhängige Ausdehnung in radialer Richtung nach außen wird somit auf einen bestimmten und festgelegten Außendurchmesser fixiert und festgehalten. Die Endleisten können sich somit nur noch radial einwärts gerichtet (und auch axial) ausdehnen. Damit ist sichergestellt, dass die Endleisten immer ein genau definiertes Spaltmaß in Richtung zum Innenumfang der Gehäusebohrung der Zellenradschleuse aufweisen, welches Spaltmaß unabhängig von Temperaturausdehnungen ist, weil die Temperaturausdehnung der ausdehnungsstabilen Zurückhalteeinrichtung praktisch vernachlässigbar ist.

Hierbei wird eine gleich bleibende Gehäusetemperatur angenommen. Eine solche gleich bleibende Gehäusetemperatur wird insbesondere bei Kühlung des Gehäuses erreicht.

Wichtig ist nun, dass die entscheidenden, der Spaltabdichtung dienenden Endleisten in ihrer radialen Ausdehnung in einem Zurückhaltekörper mit geringem Wärmeausdehnungskoeffizienten fixiert werden und daher stets auf einem temperatur-unabhängig gleich bleibenden Außendurchmesser im Abstand von der Welle gehalten sind. Der Festhaltepunkt der Zurückhalteeinrichtung an den Endleisten sollte soweit wie möglich radial außen an den Endleisten angreifen, um eine Ausdehnung der Endleisten in radialer Richtung nach außen zu unterbinden.

Die Endleisten sind jedoch auf in radialer Richtung temperatur-abhängig ausdehnungsfähigen Zellenradstegen geführt. Diese Führung dient als Ausgleich der radialen Ausdehnung der Zellenradstege, die sich somit mehr oder weniger den außen liegenden, temperatur-unabhängig fixierten Endleisten nähern oder entfernen können. Eine solche Führung könnte auch als (in radialer Richtung wirkende) "Dehnungsfuge" oder "Ausgleichsfuge" bezeichnet werden.

Die Führung der Endleisten im Bereich der "Dehnungs- oder Ausgleichsfuge" kann in

verschiedenen Ausführungsformen verwirklicht werden:

In einer ersten bevorzugten Ausführungsform handelt es sich um eine stirnseitige Führung, wobei an den radial äußeren Stirnseiten der Zellenradstege stirnseitige Längsnuten angeordnet sind, in welche die Endleisten mit zugeordneten Ansätzen radial (und bevorzugt auch axial) verschiebbar geführt sind.

Damit ist ein wesentlicher Vorteil erreicht, dass die Befestigung zweigeteilt ist, nämlich die Endleisten sind jeweils an ihren axialen äußeren Stirnseiten in einer Zurückhalteeinrichtung fixiert, jedoch radial einwärts auf den in radialer Richtung ausdehnungsfähigen Zellenradstegen verschiebbar geführt sind.

Beide Stoffe (die Endleisten und die Zellenradstege) bestehen bevorzugt aus dem gleichen Material und dehnen sich deshalb in axialer Richtung auch gleichmäßig aus.
Dies ist jedoch nicht einschränkend zu verstehen. Es ist auch vorgesehen, ein anderes Material für die Endleisten als vergleichsweise für das Material der Zellenradstege zu wählen.

Bei gleicher Materialwahl kommt es nicht zu der als nachteilig angesehenen Welligkeit (Bimetall-Effekt), wie beim Stand der Technik, insbesondere bei der DE 11 74 257, in Kauf genommen werden musste.
Bei unterschiedlicher Materialwahl kann jedoch eine in radialer und axialer Richtung gehende Verschiebung zwischen der Endleiste und dem Zellenradsteg im Bereich der Führung vorkommen.

Es besteht nun der Vorteil, dass nun auf Kunststoff-Ausdehnungskörper verzichtet werden kann. Das vorbenannte Ausführungsbeispiel verwendet nur noch Metallwerkstoffe, was bei höheren Temperaturen eine bessere Festigkeit gewährleistet.

Das vorliegende Ausführungsbeispiel schlägt vor, die Zurückhalteeinrichtung aus einem ausdehnungsarmen Metallwerkstoff, bevorzugt eine Nickel-Eisenlegierung, herzustellen, wie er zum Beispiel für die Herstellung von Urmeterkopien benutzt wird, um sich bei zu einer erwartenden Betriebstemperatur von 165° Celsius dessen geringen Temperatur-Ausdehnungskoeffizienten zu Nutze zu machen, der etwa nur 10% des für die Herstellung des Zellenrades und der Endleisten verwendeten Chromnickelstahls beträgt.

Ist damit der Zellenrad-Durchmesser auf die Temperaturausdehnungslinie unveränderlich festgelegt, kann in einem weiteren Verfahrensschritt durch Gehäusekühlung auch der Einfluss der Schüttguttemperatur auf den Gehäusedurchmesser eliminiert werden.

Damit wird der durch die Fertigung vorgegebene Schleusenspalt erstmals in allen Prozesstemperaturänderungsbereichen durchgehend erhalten.

In der vorbenannten Ausführungsform ist zu der gegenläufigen Bewegungsrichtung vorgesehen, dass die ausdehnungsstabile Rückhalteeinrichtung innerhalb und/oder außerhalb des Zellenradinnenraumes als Ringe, Scheiben oder speicherförmiges Flachmaterial zur Halterung der Endleisten ausgebildet ist, so dass diese erfindungsgemäße Lösung nicht auf die gegenläufige Ausdehnungsrichtung des ersten Lösungsvorschlages beschränkt bleibt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 5:: eine perspektivische teilweise auseinandergezogene Darstellung einer Zellenradschleuse mit der neuartigen Temperaturkompensation;
- Figur 6:: die grafische Darstellung der Ausdehnungslänge bezogen auf eine Temperaturänderung im Bereich zwischen 20° und 140° Celsius;
- Figur 7:: das Kompensationsprinzip nach dem Stand der Technik (DE 11 74 257);
- Figur 8:: das Kompensationsprinzip nach den Figuren 1 bis 4;
- Figur 9:: das Kompensationsprinzip nach den Figuren 5 bis 13;
- Figur 10:: eine Detaildarstellung der radialen Führung der Endstege in den Zellenradstegen;
- Figur 11:: ein linker Teilschnitt durch ein Zellenrad in zusammengebauten Zustand gemäß Figur 5;
- Figur 12:: ein rechter Teilschnitt durch eine andere Ausführungsform mit einer speichenförmigen Zurückhalteeinrichtung;
- Figur 13:: die Stirnansicht der speichenförmigen Zurückhalteeinrichtung.

In den dargestellten Zeichnungen ist lediglich ein einziger Zellenradsteg 2 dargestellt, der drehfest mit einer Zellenradwelle 1 verbunden ist. Die Verbindung zwischen Zellenradsteg 2 und Zellenradwelle 1 ist im Übrigen beliebig. Der Zellenradsteg 2 kann hierbei an der Zellenradwelle 1 angegossen, angeformt oder als zweistückiges Teil in beliebiger Weise befestigt sein.

Zur Abdichtung an der nicht näher dargestellten Innenwand eines Zellenradgehäuses dienen die Endleisten 3, die mit der erfindungsgemäßen Temperaturkompensations-Einrichtung ausgerüstet sind.

Auf diese Weise ist gewährleistet, dass unabhängig von der Temperatur des Schüttgutes und sonstigen Temperatureinflüssen stets ein gleicher Abstand zwischen der oberen Stirnwand der jeweiligen Endleiste 3 und der nicht näher dargestellten Gehäuse-Innenwand der Zellenradschleuse besteht.

Im gezeigten Anwendungsbeispiel sind mehreream Umfang verteilte Endleisten 3 dargestellt. Hierauf ist die Erfindung jedoch nicht beschränkt. In einer anderen Ausgestaltung kann es auch vorgesehen sein, dass nur lediglich eine einzige Endleiste 3 vorhanden ist.

Es wird noch erwähnt, dass an der Innenseite jeder Endleiste 3 jeweils eine Dichtschnur 18 angeordnet ist, um eine zugeordnete Abdichtung am Zellenradsteg 2 zu ermöglichen und dennoch ein radiales Bewegungsspiel zu erlauben.

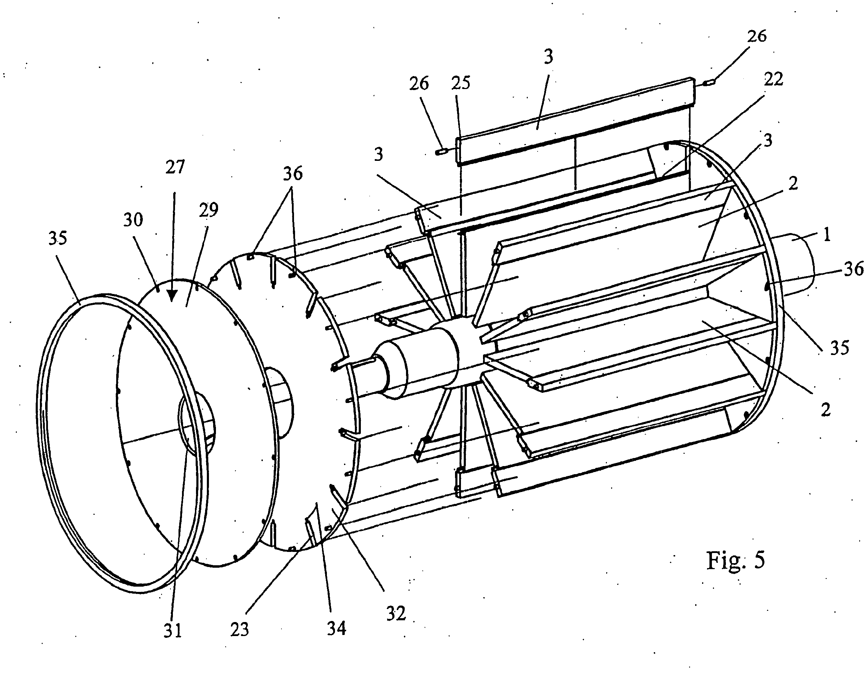

Insgesamt ergibt sich der Vorteil, dass der vorher im Stand der Technik gegebene Bimetall-Effekt ausgeschlossen wird.
Das vorbenannte Ausführungsbeispiel wird nun anhand der folgenden Figuren 5 bis 13 näher beschrieben. Es wird darauf hingewiesen, dass Beschreibung der Teile der ersten Figur auch für die gleich lautenden Teile der weiteren Figuren gilt.

In Figur 5 ist ein Zellenrad in teilweise auseinandergezogener Darstellung gezeigt, und es sind gleichmäßig am Umfang verteilt eine Anzahl von Zellenradstegen 2 auf der Zellenradwelle 1 befestigt.

Diese Zellenradstege sind bevorzugt aus einer Chrom-Nickel-Legierung (Werkstoff 1.4541).

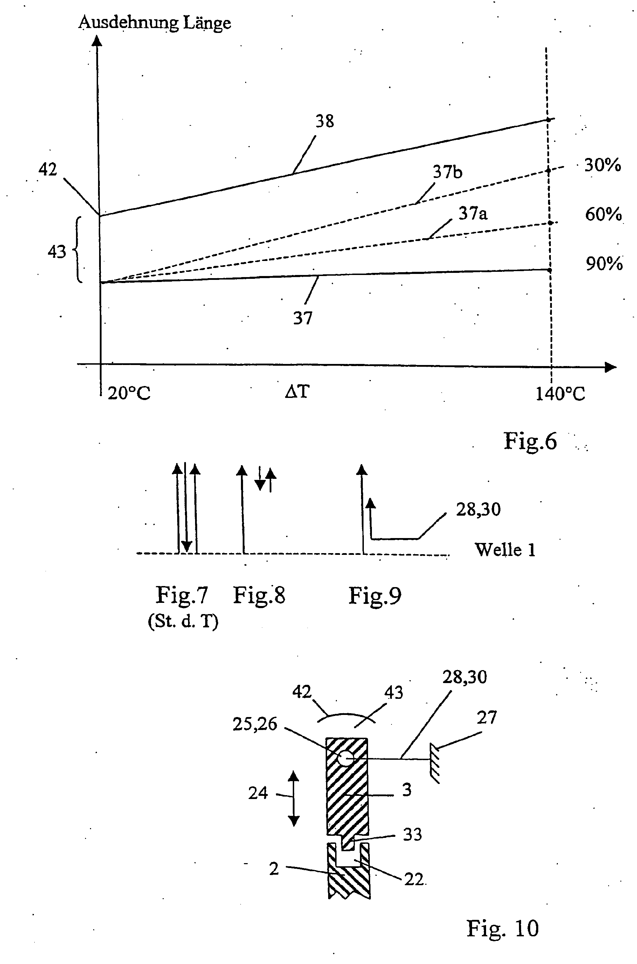

An den radial äußeren Enden der Zellenradstege 2 sind gemäß Figur 10 in axialer Richtung verlaufende Längsnuten 22 eingearbeitet, in welche zugeordnete Ansätze 23 von Endleisten 3 eingreifen, die bevorzugt aus dem gleichen Material wie die Zellenradstege 2 sind.

Damit haben die Endleisten 3 ein Bewegungsspiel in radialer Richtung (Pfeilrichtung 24 in Figur 10) auf den Stirnseiten der Zellenradstege 2.

Es wird noch darauf hingewiesen, dass statt einer stirnseitigen Verschiebeführung, wie es in Figur 10 gezeigt ist, auch andere radiale Verschiebeführungen in den Pfeilrichtungen 24 verwendet werden können, wie dies beispielsweise auch in Figur 1 nach dem ersten Ausführungsbeispiel der Fall erläutert wurde. Dort bestand die Verschiebeführung aus radial nach außen geöffneten, taschenartigen Führungen.

Wichtig ist nun, dass in den jeweils axial gegeneinander gerichteten Stirnseiten der jeweiligen Endleiste 3 jeweils mindesten ein Stift 26 vorhanden ist, der in eine dort angeordnete Bohrung 25 spielfrei eingepasst ist. Statt einer Stift-Bohrungshalterung können jedoch auch andere, spielfreie Befestigungen gewählt werden.

Wichtig ist nun, dass die Bolzen 26 durch zugeordnete Radialschlitze 33 im Bereich einer Seitenscheibe 32 hindurchgreifen und am Grund der Radialschlitze 33 zugeordnete Ausnehmungen 34 vorhanden sind, die mit den Längsnuten 22 fluchten.

Es wird hierbei eine Bearbeitung der Seitenscheibe 32 aus fertigungstechnischen Gründen bevorzugt, bei der zunächst die Seitenscheibe 32 fest mit der Zellenradwelle 1 und den Zellenradstegen 2 verschweißt wird, um danach erst die zugeordneten Längsnuten 22 in die Zellenradstege 2 einzuarbeiten. Aus diesem Grunde fluchten deshalb die Längsnuten 22 in den Stirnseiten der Zellenradstege 2 mit den zugeordneten Ausnehmungen 34 am Grund der Radialschlitze 33 im Bereich der Seitenscheibe 32.

Die vorher erwähnten Stifte 26 greifen nun wiederum spielfrei und passgenau in zugeordnete Bohrungen 30 einer Zurückhalteeinrichtung 27 ein, wobei diese Bohrungen 30 gleichmäßig am Umfang verteilt entsprechend dem Rastermaß der Endleisten 3 angeordnet sind.

Die Zurückhalteeinrichtung 27 ist als ausdehnungsstabile Fixiereinheit für die Endleisten 3 ausgebildet, die somit stets - unabhängig von Temperatureinflüssen - auf einem gleichen Außendurchmesser gehalten werden, weil die Zurückhalteeinrichtung 27 fest mit der Zellenradwelle 1 verbunden ist.

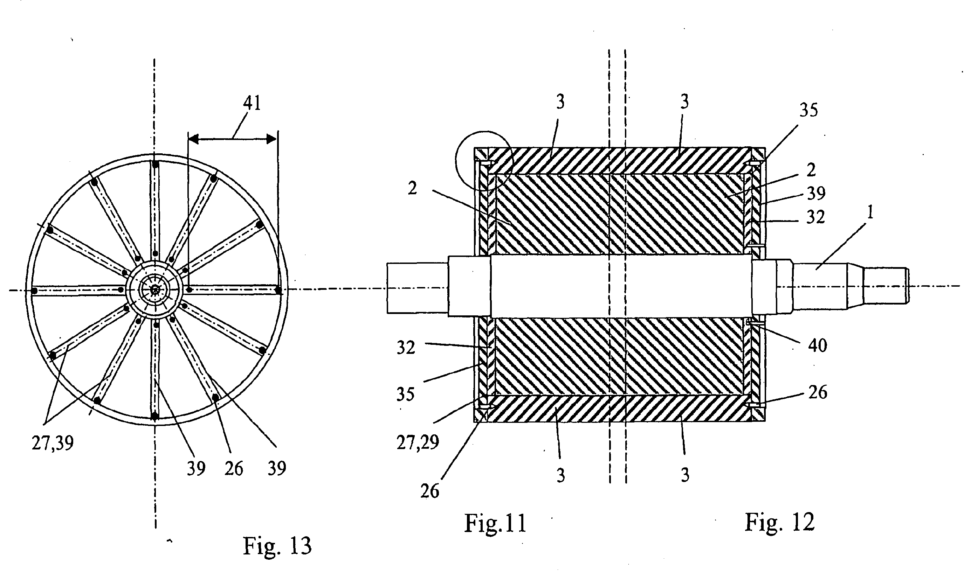

Im gezeigten Ausführungsbeispiel besteht die Zurückhalteeinrichtung 27 aus einer durchgehenden Scheibe 29. Hierauf ist die Erfindung jedoch nicht beschränkt. In einer anderen Ausgestaltung gemäß Figur 12 und 13 ist es vorgesehen, dass die Scheibe in einzelne, radial nach außen gerichtete Speichen 39 aufgeteilt ist und die Speichen 39 wiederum die ausdehnungsstabile Zurückhalteeinrichtung 27 bilden.

Es wird noch erwähnt, dass zur stirnseitigen Abdeckung der Scheibe 29 und der Seitenscheibe 32 ein Abdeckring 35 verwendet wird, der auf gleichmäßig am Umfang verteilt angeordnete Bolzen 36 aufgesteckt wird, die wiederum passgenau und spielfrei am äußeren Umfang der Seitenscheibe 32 angeordnet sind.

Sinn dieses Abdeckrings 35 ist die stirnseitige Abdeckung der Scheibe 29 und der Seitenscheibe 32, um ein Eindringen von Pulver- oder Granulatmaterial von der Stirnseite in den Innenraum des Zellenrades zu vermeiden.

Das Grundprinzip dieses zweiten Ausführungsbeispieles ist in den Figuren 9 und 10 schematisiert dargestellt. Dort ist erkennbar, dass über den Bolzen 26 und die Bohrung 25 eine starre (axiale) Verbindung 28 zu der ausdehnungsstabilen Zurückhalteeinrichtung 27 gegeben ist, so dass mindestens die radial außen liegende Kante der Endleiste 3 stets auf einem gleichen Durchmesser in Richtung auf die Gehäusewand (42) der Zellenradschleuse gehalten wird, unabhängig, wie das radiale Ausdehnungsspiel des darunterliegenden Zellenradsteges 2 ist. Damit ergibt sich über den Temperaturbereich von etwa 20 bis 150 ° Celsius ein gleich bleibender Spalt 43.

In Figur 9 ist schematisch mit Hilfe von Pfeilen dargestellt, dass das Material der Zellenradstege und der Endleisten einen zehnfach höheren Ausdehnungskoeffizienten aufweisen kann als das Material der Zurückhalteeinrichtung 27 (symbolisiert durch den kürzeren Pfeil).

Beide Ausdehnungen gehen in dieselbe Richtung und kompensieren sich somit, weil die entscheidenden (den Durchmesser des Rotors bestimmenden) Endleisten 3 stets auf einem gleichen, äußeren radialen Durchmesser unabhängig von sich ändernden Temperaturen ausdehnungsstabil gehalten werden.

Im Gegenzug hierzu ist das Ausführungsbeispiel nach den Figuren 1 bis 4 in Figur 8 schematisiert dargestellt. Dort ist angegeben, dass ein bestimmtes Ausdehnungsspiel in der einen Richtung mit einem gleichartigen Ausdehnungsspiel in der anderen Richtung kompensiert wird.

Dies wird durch die beiden kleineren und kürzeren Pfeile dargestellt.

Diese gegenläufigen Ausdehnungsspiele werden durch unterschiedliche Kunststoff-Metall-Material-Kombination erreicht.

Die Figur 7 hingegen zeigt den Stand der Technik, wo erkennbar ist, dass ein großes Ausdehnungsspiel in der einen Richtung mit einem gleichgroßen entgegengesetzten Ausdehnungsspiel in der anderen Richtung kompensiert wird.

Bezogen auf die axiale Länge des Zellenradsteges führte dies zu dem bekannten Bimetall-Effekt.

Die Figur 6 zeigt das temperatur-abhängige Ausdehnungsspiel der verwendeten Werkstoffe.

Es ist der Temperaturbereich zwischen 20° und 140° Celsius (Abszisse) angegeben und es ist dargestellt, dass auch die Zurückhalteeinrichtung gemäß der Geraden 37 ein gewisses (geringes) Ausdehnungsspiel aufweisen kann. Dieses Ausdehnungsspiel ist jedoch lediglich ein Zehntel des Materials der Rotorausdehnung (Endstege und Zellenradstege), dessen Materialien aus ChromNickelstahl bestehen. Dieses geringe Ausdehnungsspiel ist dem größeren Ausdehnungsspiel des Gehäuses (Gerade 38) gegenüber gestellt. Der Abstand zwischen den Schnittpunkten der Geraden 37 und 38 gibt die Spaltweite bei der Temperatur 20 Grad Celsius an. Somit kann man je nach der Art des gewählten Materials und der verwendeten radialen Länge der Zurückhalteeinrichtung (Geraden 37, 37a, 37b) das Spaltmaß über den angegebenen Temperaturbereich konstant halten.

Mit den Geraden 37a und 37b ist noch angegeben, dass in Abhängigkeit von der radialen Länge der Zurückhalteeinrichtung 27 unterschiedliche Steigungen der Geraden 37a, 37b erzielbar sind und deshalb entsprechend der Länge der Zurückhalteeinrichtung 27 unterschiedliche Spaltmasse einstellbar sind. Diese Länge 41 ist in Figur 13 eingezeichnet.

In Figur 12 und 13 ist als weitere Ausführungsform dargestellt, dass die Zurückhalteeinrichtung 27 auch speichenförmig durch Speichen 39 verwirklicht werden kann, die gleichmäßig am Umfang der Zellenradwelle 1 verteilt radial nach außen weisen.

Wichtig bei diesem Ausführungsbeispiel ist, dass jede Speiche 39 mit einem radial innenliegenden Basisbolzen 40 an der Seitenscheibe 32 befestigt ist und dass das radial äußere Ende jeder Speiche 39 mit Hilfe des vorher erwähnten Bolzens 26 fest und spielfrei mit der jeweiligen Endleiste 3 verbunden ist.

Je weiter der Basisbolzen 40 vom Drehmittelpunkt der Zellenradwelle 1 entfernt ist, desto kürzer ist die Länge der Speiche 39 desto kürzer ist auch dementsprechend die Länge 41, wie demzufolge zu einer größeren Ausdehnung der Endleisten 3 in radialer Richtung führt und dies ist durch die Steigung der Geraden 37a und 37b dargestellt.

So ergeben sich beispielsweise nur noch 60% oder 30% Kompensationswirkung im Vergleich zu der 90%-igen Kompensationswirkung einer durchgehenden Scheibe 29 gemäß Figur 5.

Dies hat den Vorteil, dass man in der Praxis bei Wahl der gewünschten Länge 41 jeden gewünschten Spalt einstellen kann, der über eine gewisse Temperaturdifferenz stabil bleibt.

Im Ausführungsbeispiel nach Figur 5 ist im Übrigen dargestellt, dass die Mittenbohrung 31 der Zurückhalteeinrichtung 27 (dargestellt durch die Scheibe 29) fest auf der Zellenradwelle 1 befestigt ist, ebenso wie die Mittenbohrung der Seitenscheibe 32.

### Zeichnungslegende

- 1: Zellenradwelle
- 2: Zellenradsteg
- 3: nicht benannt
- 4: nicht benannt
- 5: nicht benannt nicht benannt
nicht benannt nicht benannt
nicht benannt nicht benannt
nicht benannt nicht benannt
nicht benannt nicht benannt
nicht benannt nicht benannt
nicht benannt18Dichtschnur
nicht benannt nicht benannt
nicht benannt
- 6: Längsnut
- 7: Ansatz
- 8: Pfeilrichtung
- 9: Bohrung
- 10: Stift
- 11: Zurückhalteeinrichtung
- 12: Verbindung
- 13: Scheibe
- 14: Bohrung
- 15: Mittenbohrung
- 16: Seitenscheibe
- 17: Radialschlitz
- 18: Ausnehmung
- 19: Abdeckung
- 20: Bolzen
- 21: Gerade 37a,37b
- 22: Gerade
- 23: Speiche
- 24: Basisbolzen
- 25: Länge
- 26: Gehäusewand
- 27: Spalt

## Patentansprüche

1. Zellenradschleuse zur Zuführung von heißem Schüttgut mit Konstanthaltung des radialen Spieles zwischen den Steg-Enden des Zellenrades und der Gehäusewand (42) der Gehäusebohrung durch Kombination von Werkstoffen unterschiedlicher Wärmeausdehnungskoeffizienten, wobei zum Konstanthalten des radialen Spiels zwischen den Wänden des Zellenrades und der Gehäusewand (42) deren wärmebedingte Änderungen der Durchmesser kompensiert sind, wobei das Zellenrad (1) aus am Umfang der Zellenradwelle (1) gleichmäßig verteilt angeordneten Zellenradstegen (2) besteht, an deren äußeren, radialen Enden Endleisten (3, 4) angeordnet sind, deren radiale Erstreckung den Spalt (43) zur Gehäusewand (42) der Zellenradschleuse definiert, **dadurch gekennzeichnet, dass** die der Spaltabdichtung dienenden Endleisten (3, 4) in ihrer radialen Ausdehnung in einem als Ring, Scheibe oder speichenförmigen Flachmaterial ausgeformten Zurückhaltekörper (27, 39) mit geringem Wärmeausdehnungskoeffizienten fixiert sind und daher stets auf einem temperatur-unabhängig gleich bleibenden Außendurchmesser im Abstand von der Zellenradwelle (1) gehalten sind.

2. Zelleradschleuse nach Anspruch 1, **dadurch gekennzeichnet, dass** die Endleisten (3, 4) an ihren in axialer Richtung weisenden Stirnseiten mit der unabhängig von Temperaturdifferenzen ausdehnungsstabilen Zurückhalteeinrichtung (27, 39) verbunden sind und dass zwischen den Endleisten (3, 4) und den Zellenradstegen (2) eine in radialer Richtung (Pfeilrichtung 24) verschiebbare Führung (22, 23) vorhanden ist, (Fig. 5- 13).

3. Zellenradschleuse nach Anspruch 1 oder 2, **dadurch gekennzeichnet, dass** die Zurückhalteeinrichtung (27) aus einer Seitenscheibe (32) oder Seitenscheibenring besteht, (Fig. 5).

4. Zellenradschleuse nach Anspruch 1 oder 2, **dadurch gekennzeichnet, dass** die Zurückhalteeinrichtung aus einer Vielzahl von gleichmäßig am Umfang der Zellenradwelle (2) befestigten Speichen (39) besteht, (Fig. 12, 13).

5. Zellenradschleuse nach einem der Ansprüche 1 bis 4, **dadurch gekennzeichnet, dass** die Zurückhalteeinrichtung (27) aus einer Nickel-Eisen-Legierung mit sehr geringer Wärmeausdehnung mit etwa 36% Nickelanteil besteht, und dass im Temperaturbereich von 20 bis 140 ° Celsius maßkonstant ist.

6. Zellenradschleuse nach einem der Ansprüche 1 bis 5, **dadurch gekennzeichnet, dass** an den radial äußeren Stirnseiten der Zellenradstege (2) stirnseitige Längsnuten (22) angeordnet sind, in welche die Endleisten (3) mit zugeordneten Ansätzen (23) mindestens radial verschiebbar geführt sind.

7. Zellenradschleuse nach einem der Ansprüche 1 bis 6, **dadurch gekennzeichnet, dass** die Endleisten (3, 4) und die Zellenradstege (2) aus dem gleichen Metallmaterial bestehen.

## Claims

1. Cellular wheel sluice for supplying hot bulk material with stabilisation of the radial play between the webs ends of the cellular wheel and the housing wall (42) of the housing bore by means of the combination of materials of different thermal expansion coefficients, wherein to stabilise the radial play between the walls of the cellular wheel and the housing wall (42), the changes in the diameters thereof caused by heat are compensated, the cellular wheel (1) consisting of cellular wheel webs (2) arranged uniformly distributed on the periphery of the cellular wheel shaft (1), on the outer, radial ends of which cellular wheel webs, end strips (3, 4) are arranged, the radial extension of which defines the gap (43) from the housing wall (42) of the cellular wheel sluice, **characterised in that** the end strips (3, 4) being used to seal the gap, are fixed with respect to their radial extension in a retaining body (27, 39) formed as a ring, disc or spoke-shaped flat material, with a low heat expansion coefficient and are therefore always held at a temperature-independent constant external diameter at a spacing from the cellular wheel shaft (1).

2. Cellular wheel sluice according to claim 1, **characterised in that** the end strips (3, 4) are connected at their end faces pointing in the axial direction to the retaining device (27, 39) which is stable with regard to expansion independently of temperature differences and **in that** a guide (22, 23) that can be displaced in the radial direction (arrow direction 24) is present between the end strips (3, 4) and the cellular wheel webs (2) (Fig. 5 to 13).

3. Cellular wheel sluice according to claim 1 or 2, **characterised in that** the retaining device (27) consists of a side disc (32) or side disc ring (Fig. 5).

4. Cellular wheel sluice according to claim 1 or 2, **characterised in that** the retaining device consists of a plurality of spokes (39) fastened uniformly at the periphery of the cellular wheel shaft (2) (Fig. 12, 13).

5. Cellular wheel sluice according to any one of claims 1 to 4, **characterised in that** the retaining device (27) consists of a nickel/iron alloy with very low heat expansion with about 36% nickel content and is dimensionally constant in the temperature range from 20 to 140°C.

6. Cellular wheel sluice according to any one of claims 1 to 5, **characterised in that** end face longitudinal grooves (22) are arranged on the radially outer end faces of the cellular wheel webs (2), into which longitudinal grooves the end strips (3) are at least radially displaceably guided with associated lugs (23).

7. Cellular wheel sluice according to any one of claims 1 to 6, **characterised in that** the end strips (3, 4) and the cellular wheel webs (2) consist of the same metal material.

## Revendications

1. Ecluse à roue cellulaire pour l'arrivée d'un produit chaud en vrac avec une stabilisation du jeu radial défini entre les extrémités des aubes de la roue cellulaire et la paroi de boîtier (42) d'un alésage de boîtier grâce à la combinaison de matériaux ayant différents coefficients de dilatation thermique, dans laquelle les modifications de diamètre des parois de la roue cellulaire et de la paroi de boîtier (42) provoquées par la chaleur sont compensées afin de stabiliser le jeu radial entre celles-ci, dans laquelle la roue cellulaire (1) est constituée d'aubes (2) de roue cellulaire régulièrement réparties sur la circonférence de l'arbre (1) de roue cellulaire, aux extrémités radiales extérieures desquelles des bords de fuite (3, 4) sont prévus, dont l'étendue radiale définit l'écartement (43) par rapport à la paroi de boîtier (42), **caractérisée en ce que** les bords de fuite (3, 4) servant à l'étanchéification de l'écartement sont fixés radialement dans un corps de retenue (27, 39), formé en tant qu'anneau, disque ou matériau plat de forme rayonnante, ayant un faible coefficient de dilatation thermique, et sont maintenus grâce à cela constamment à distance de l'arbre (1) de roue cellulaire, à un diamètre extérieur demeurant constant indépendamment de la température.

2. Ecluse à roue cellulaire selon la revendication 1, **caractérisée en ce que** les bords de fuite (3, 4) sont reliés par leurs faces axialement terminales avec le dispositif de retenue (27, 39) dont la dilatation est stable indépendamment des différences de température, et **en ce qu'**une conduite (22, 23) pouvant être déplacée dans le sens radial (sens de la flèche 24) est présente entre les bords de fuite (3, 4) et les aubes (2) de roue cellulaire (figures 5 à 13).

3. Ecluse à roue cellulaire selon la revendication 1 ou 2, **caractérisée en ce que** le dispositif de retenue (27) est constitué par un disque latéral (32) ou un anneau de disque latéral, (figure 5).

4. Ecluse à roue cellulaire selon la revendication 1 ou 2, **caractérisée en ce que** le dispositif de retenue est constitué par plusieurs rayons (39) fixés de manière régulière sur la circonférence de l'arbre (2) de roue cellulaire, (figures 12, 13).

5. Ecluse à roue cellulaire selon l'une quelconque des revendications 1 à 4, **caractérisée en ce que** le dispositif de retenue (27) est constitué par un alliage nickel-fer à très faible dilatation thermique ayant une proportion d'environ 36 % de nickel, et est dimensionnellement constant dans la plage de température de 20 à 140°C.

6. Ecluse à roue cellulaire selon l'une quelconque des revendications 1 à 5, **caractérisée en ce que** des rainures longitudinales (22) frontales, dans lesquelles les bords de fuite.(3) sont guidés de manière à pouvoir au moins être déplacés radialement par des saillies (23) correspondantes, sont disposées sur les faces terminales radialement extérieures des aubes (2) de roue cellulaire.

7. Ecluse à roue cellulaire selon l'une quelconque des revendications 1 à 6, **caractérisée en ce que** les bords de fuite (3, 4) et les aubes (2) de roue cellulaire sont constitués par le même matériau métallique.
